# EUROPEAN PATENT APPLICATION

(11) **EP 4 321 396 A1**
(43) Date of publication of application: **14.02.2024**
(21) Application number: 22891753.0
(22) Date of filing: 18.10.2022
(51) Int. Cl.: B60S 5/06, B66F 7/06

(54) **BATTERY SWAP DEVICE AND BATTERY SWAP SYSTEM**

(30) Priority: 10.11.2021 CN 202122749501 U
(71) Applicant: Contemporary Amperex Technology Co., Limited, Ningde, Fujian 352100 (CN)
(72) Inventor: CHEN, Disong, Ningde, Fujian 352100 (CN); WU, Yuanhe, Ningde, Fujian 352100 (CN); YE, Qingfeng, Ningde, Fujian 352100 (CN); YANG, Xin, Ningde, Fujian 352100 (CN)
(74) Representative: Ziebig Hengelhaupt Intellectual Property Attorneys Patentanwaltskanzlei PartGmbB
(86) International application number: PCT/CN2022/125954
(87) International publication number: WO 2023/082956

(57) **Abstract**

The present application provides a battery swapping apparatus and a battery swapping system, relating to the technical field of battery swapping of electrical devices. The battery swapping apparatus includes a movable base, a locking and unlocking mechanism, and a scissor type lifting mechanism. The locking and unlocking mechanism is configured to lock a battery to an electrical device or unlock the battery from the electrical device. The scissor type lifting mechanism is configured to drive the locking and unlocking mechanism to move up and down. The scissor type lifting mechanism includes a scissor unit, a driving member, a first transmission member, and a second transmission member. The first transmission member is mounted on the scissor unit and forms a slope fit with the second transmission member. The driving member is configured to drive the second transmission member to move, so as to drive the scissor unit to perform a scissor movement through the first transmission member. The slope fit formed between the first transmission member and the second transmission member can avoid the situation that when the scissor unit is lifted at the lowest point, the driving member needs a large power to meet the thrust required by the scissor unit in the horizontal direction, thereby reducing the power of the driving member, and reducing the purchase cost and use cost.

## Description

### CROSS-REFERENCE TO RELATED APPLICATIONS

The present application claims priority to Chinese patent application 202122749501.8 filed on November 10, 2021 and entitled "Battery Swapping Apparatus and Battery Swapping System", the entire contents of which are incorporated herein by reference.

### TECHNICAL FIELD

The present application relates to the technical field of battery swapping of electrical devices, and specifically, to a battery swapping apparatus and a battery swapping system.

### BACKGROUND

At present, with the development of the new energy technology, the number of devices using batteries has increased. When the electric energy of an electrical device is exhausted, the electric energy is often supplemented by connecting a charging device. Furthermore, there is also a way to quickly supplement electric energy by swapping batteries. Usually, a special apparatus (namely, a battery swapping apparatus) is required to swap batteries.

The battery swapping apparatus includes a movable base, an unlocking platform, a locking and unlocking mechanism, and a lift mechanism. The locking and unlocking mechanism is arranged on the unlocking platform and configured to lock a battery to an electrical device or unlock the battery from the electrical device. The lift mechanism is arranged between the movable base and the unlocking platform and configured to drive the unlocking platform to move up and down. However, the lift mechanism has high power consumption, resulting in higher battery swapping cost.

### SUMMARY OF THE INVENTION

Embodiments of the present application provide a battery swapping apparatus and a battery swapping system to improve the problem of high power consumption of the battery swapping apparatus.

According to a first aspect, an embodiment of the present application provides a battery swapping apparatus, including a movable base, a locking and unlocking mechanism, and a scissor type lifting mechanism. The locking and unlocking mechanism is configured to lock a battery to an electrical device or unlock the battery from the electrical device. The scissor type lifting mechanism is arranged between the movable base and the locking and unlocking mechanism. The scissor type lifting mechanism is configured to drive the locking and unlocking mechanism to move up and down. The scissor type lifting mechanism includes a scissor unit, a driving member, a first transmission member, and a second transmission member. The first transmission member is mounted on the scissor unit and forms a slope fit with the second transmission member. The driving member is configured to drive the second transmission member to move, so as to drive the scissor unit to perform a scissor movement through the first transmission member.

In the above technical solution, the scissor type lifting mechanism performs a scissor movement through the scissor unit to drive the locking and unlocking mechanism to move up and down, and the scissor movement performed by the scissor mechanism is realized by driving the second transmission member to move through the driving member after the first transmission member forms a slope fit with the second transmission member. Since the first transmission member forms a slope fit with the second transmission member, when the driving member drives the second transmission member to move, the first transmission member and the second transmission member can slide relative to each other along the slope. An inclination angle of the slope is greater than an included angle between a scissor arm of the scissor unit and the movable base when the locking and unlocking mechanism is located at the lowest point. Therefore, the driving member can push the second transmission member to move with a smaller horizontal thrust to enable the scissor type lifting mechanism to drive the locking and unlocking mechanism to move up and down, thereby reducing the power of the driving member, and reducing the purchase cost and use cost. Furthermore, the size of the low-power driving member is smaller, thereby reducing the overall height of the scissor type lifting mechanism.

In some embodiments of the first aspect of the present application, the moving direction of the second transmission member is perpendicular to the lifting direction of the locking and unlocking mechanism.

In the above technical solution, the moving direction of the second transmission member is perpendicular to the lifting direction of the locking and unlocking mechanism, so that the first transmission member and the second transmission member can support the locking and unlocking mechanism in the lifting direction of the locking and unlocking mechanism, and thus, the locking and unlocking mechanism can stably move up and down.

In some embodiments of the first aspect of the present application, the scissor unit includes a first scissor arm and a second scissor arm hinged to each other, the scissor type lifting mechanism further includes a mounting shaft, the mounting shaft is connected to the hinge joint between the first scissor arm and the second scissor arm and extends along the hinge axis of the first scissor arm and the second scissor arm, and the first transmission member is mounted on the mounting shaft.

In the above technical solution, the mounting shaft is connected to the hinge joint between the first scissor arm and the second scissor arm and extends along the hinge axis of the first scissor arm and the second scissor arm, and the first transmission member is mounted on the mounting shaft. Since the first transmission member forms a slope fit with the second transmission member, when the driving member drives the second transmission member to move, the first transmission member and the second transmission member can slide relative to each other along the slope to drive the mounting shaft to move up and down, and the mounting shaft moving up and down can drive the scissor unit to perform a scissor movement to enable the scissor type lifting mechanism to drive the locking and unlocking mechanism to move up and down. The driving manner is simple, and the power consumption is smaller.

In some embodiments of the first aspect of the present application, the scissor type lifting mechanism includes two scissor units, the two scissor units are arranged opposite to each other, the mounting shaft is arranged between the two scissor units, and two ends of the mounting shaft are respectively connected to the two scissor units.

In the above technical solution, the scissor type lifting mechanism includes two scissor units, the mounting shaft is arranged between the two scissor units, two ends of the mounting shaft are respectively connected to the two scissor units, and the mounting shaft moving up and down can drive the two scissor units to perform a scissor movement, thus simplifying the structure and volume of the scissor type lifting mechanism, and being beneficial for miniaturization of a battery swapping apparatus. Two scissor units are arranged at an interval between the movable base and the locking and unlocking mechanism, so that the force on the locking and unlocking mechanism can be uniform, and the locking and unlocking mechanism can stably move up and down.

In some embodiments of the first aspect of the present application, two first transmission members are provided, and the two first transmission members are arranged at two ends of the mounting shaft in an axial direction of the mounting shaft at an interval.

In the above technical solution, the two first transmission members are arranged at two ends of the mounting shaft in an axial direction of the mounting shaft at an interval, and each first transmission member forms a slope fit with the second transmission member to drive the mounting shaft to move up and down, so that the force on the mounting shaft in the axial direction is balanced to enable the locking and unlocking mechanism to stably move up and down.

In some embodiments of the first aspect of the present application, two second transmission members are provided, the two second transmission members are arranged corresponding to the two first transmission members, the scissor type lifting mechanism further includes a connecting element, and the connecting element is configured to connect the two second transmission members.

In the above technical solution, the two second transmission members are arranged corresponding to the two first transmission members, and the second transmission member forms a slope fit with the corresponding first transmission member to avoid an excessive load on the second transmission member due to the slope fit of the two first transmission members with the same second transmission member, thereby reducing the risk of damage to the second transmission member due to an overload. The two second transmission members are connected by the connecting element, so that the structural stability of the second transmission member can be enhanced, and the synchronous movement of the two second transmission members can be ensured.

In some embodiments of the first aspect of the present application, the first transmission member is a roller, and the second transmission member has a slope that fits with the roller.

In the above technical solution, the first transmission member is a roller, and the roller fits with the slope of the second transmission member, so that the resistance when the second transmission member and the first transmission member slide relative to each other can be reduced, the energy consumption of the locking and unlocking mechanism when moving up and down can be reduced, and the locking and unlocking mechanism can stably move up and down.

In some embodiments of the first aspect of the present application, the scissor type lifting mechanism further includes a guide rail, the guide rail is arranged on the movable base, the second transmission member is slidably arranged on the guide rail, and the driving member is configured to drive the second transmission member to move along the guide rail.

In the above technical solution, the second transmission member is slidably arranged on the guide rail, and the driving member drives the second transmission member to slide along the guide rail, so as to ensure that the second transmission member moves along a fixed trajectory, thereby improving the stability of the second transmission member, and further improving the stability of the locking and unlocking mechanism when moving up and down.

In some embodiments of the first aspect of the present application, the scissor type lifting mechanism further includes a lead screw and a nut, the nut sleeves the lead screw and is in threaded fit with the lead screw, the driving member is configured to drive the lead screw to rotate, and the second transmission member is fixed to the nut.

In the above technical solution, the nut is in threaded connection with the lead screw, the second transmission member is fixed to the nut, the driving member drives the lead screw to rotate, and the rotation of the lead screw can drive the nut to move linearly so as to drive the second transmission member to move linearly. The driving manner is simple, so that the structure of the battery swapping apparatus is simple and compact.

In some embodiments of the first aspect of the present application, the battery swapping apparatus further includes a lifting platform and a floating platform, the scissor type lifting mechanism is arranged between the movable base and the lifting platform, and the scissor type lifting mechanism is configured to drive the lifting platform to move up and down; and the floating platform is floatingly connected to the lifting platform and located above the lifting platform, and the locking and unlocking mechanism is arranged on the floating platform.

In the above technical solution, the floating platform is floatingly connected to the lifting platform, so that the floating platform can move relative to the lifting platform in a horizontal plane, so as to facilitate the positioning of a structure arranged on the floating platform, an electrical device, and a battery mounted on the electrical device.

In some embodiments of the first aspect of the present application, the lifting platform and the floating platform are floatingly connected by at least one floating chain.

In the above technical solution, the lifting platform and the floating platform are floatingly connected by a floating chain, and the floating chain can make the floating platform and the lifting platform suspended without contact, so that the floating platform can float horizontally relative to the lifting platform, so as to avoid floating obstruction due to frictional contact between the floating platform and the lifting platform when the floating platform floats horizontally relative to the lifting platform.

In some embodiments of the first aspect of the present application, the battery swapping apparatus further includes a locking assembly, and the locking assembly is configured to lock the floating platform to the lifting platform or release the floating platform from the lifting platform.

In the above technical solution, by arranging the locking assembly, when it is necessary to realize the positioning of the floating platform and the electrical device, the locking assembly releases the floating platform from the lifting platform, so that the floating platform can float relative to the lifting platform to facilitate accurate positioning fit between the structure on the floating platform and the electrical device. In the process of locking the battery to the electrical device or unlocking the battery from the electrical device by the locking and unlocking mechanism and in the process of transporting the battery by the battery swapping apparatus, the locking assembly locks the floating platform to the lifting platform, so that the battery can be stably placed on the floating platform to improve the stability of the disassembly and assembly of the battery and the stability of transport of the battery.

According to a second aspect, an embodiment of the present application provides a battery swapping system, including a track, a battery swapping platform, a battery picking and placing apparatus, and the battery swapping apparatus provided in the embodiment of the first aspect. The battery swapping apparatus is movably arranged on the track. The battery swapping platform is located at one end of the track. The battery picking and placing apparatus is located at the other end of the track.

In the above technical solution, when the scissor type lifting mechanism of the battery swapping apparatus drives the locking and unlocking mechanism to move up and down, the scissor type lifting mechanism performs a scissor movement through the scissor unit to drive the locking and unlocking mechanism to move up and down, and the scissor movement performed by the scissor mechanism is realized by driving the second transmission member to move through the driving member after the first transmission member forms a slope fit with the second transmission member. Since the first transmission member forms a slope fit with the second transmission member, when the driving member drives the second transmission member to move, the first transmission member and the second transmission member can slide relative to each other along the slope. An inclination angle of the slope is greater than an included angle between a scissor arm of the scissor unit and the movable base when the locking and unlocking mechanism is located at the lowest point. Therefore, the driving member can push the second transmission member to move with a smaller horizontal thrust, thereby reducing the power of the driving member, and reducing the purchase cost and use cost. Furthermore, the size of the low-power driving member is smaller, thereby reducing the overall height of the scissor type lifting mechanism.

### DESCRIPTION OF DRAWINGS

In order to illustrate the technical solutions in the embodiments of the present application more clearly, the following briefly introduces the drawings required in the embodiments. It should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a battery swapping apparatus in the prior art;
FIG. 2 is a schematic structural view of a battery swapping system provided in some embodiments of the present application;
FIG. 3 is a schematic structural view of a battery swapping apparatus provided in some embodiments of the present application;
FIG. 4 is a schematic structural view of a movable base provided in some embodiments of the present application;
FIG. 5 is an enlarged view of a position I in FIG. 3;
FIG. 6 is an assembled schematic view of a floating platform and a lifting platform;
FIG. 7 is an unassembled schematic view of a floating platform and a lifting platform;
FIG. 8 is a schematic structural view of a scissor type lifting mechanism provided in some embodiments of the present application;
FIG. 9 is a schematic structural view of a portion of a scissor type lifting mechanism provided in some embodiments of the present application;
FIG. 10 is an enlarged view of a position II in FIG. 3;
FIG. 11 is an exploded view of a battery swapping apparatus provided in some other embodiments of the present application;
FIG. 12 is a schematic structural view of a battery swapping apparatus provided in some other embodiments of the present application;
FIG. 13 is a schematic view in which a vehicle is lifted;
FIG. 14 is a schematic view in which a battery swapping apparatus is moved below a vehicle;
FIG. 15 is a schematic view in which a lift mechanism drives a lifting platform to move up and a positioning member to move up;
FIG. 16 is a schematic view in which a battery on a vehicle is unlocked from the vehicle;
FIG. 17 is a schematic view in which a lift mechanism drives a lifting platform to move down and a positioning member to move down;
FIG. 18 is a schematic view in which a battery is transported away by a battery swapping apparatus.

Reference numerals: 1000-battery swapping system; 100', 100-battery swapping apparatus; 10', 10-movable base; 11-bottom plate; 111-first sliding rail; 12-driving motor; 13-gear; 14-roller; 15-distribution box; 16-controller; 20', 20-locking and unlocking mechanism; 21-locking and unlocking driving motor; 22-bolt sleeve; 30', 30-scissor type lifting mechanism; 31', 31-scissor unit; 311', 311-first scissor arm; 3111-first sliding block; 312', 312-second scissor arm; 3121-second sliding block; 32-driving member; 33-first transmission member; 34-second transmission member; 341-slope; 35-mounting shaft; 36-connecting element; 37-guide rail; 38-lead screw; 39-nut; 40-floating platform; 41-mounting member; 411-first connecting part; 412-second connecting part; 42-fixing block; 50-lifting platform; 51-floating chain; 52-second sliding rail; 60-locking assembly; 61-electromagnet; 62-magnet attraction plate; 70-positioning mechanism; 71-driving component; 72-positioning member; 73-first gear; 74-second gear; 75-lead screw; 76-first mounting seat; 77-connecting plate; 78-first guide shaft; 79-first detection unit; 80-supporting mechanism; 81-second mounting seat; 82-supporting member; 83-elastic member; 84-second guide shaft; 85-second detection unit; 90-protective enclosure; 91-first opening; 92-second opening; 93-third opening; 94-slot; 95-notch; 200-battery picking and placing apparatus; 210-fork; 300-track; 400-battery swapping platform; 410-avoidance opening; 2000-battery; 3000-vehicle.

### DETAILED DESCRIPTION

In order to make the objectives, technical solutions and advantages of the embodiments of the present application clearer, the technical solutions in the embodiments of the present application will be clearly and completely described below in conjunction with the drawings in the embodiments of the present application. It is apparent that the described embodiments are a part of the embodiments of the present application rather than all the embodiments. The assemblies in the embodiments of the present application generally described and illustrated in the drawings herein can be arranged and designed in a variety of different configurations.

Accordingly, the following detailed descriptions of the embodiments of the present application provided in the drawings are not intended to limit the scope of the claimed present application, but merely represent selected embodiments of the present application. All other embodiments obtained by a person of ordinary skill in the art based on the embodiments in the present application without creative efforts shall fall within the protection scope of the present application.

It should be noted that, in the case of no conflict, the embodiments in the present application and the features in the embodiments may be combined with each other.

It should be noted that similar numerals and letters denote similar items in the following drawings, therefore, once an item is defined in a drawing, it does not need to be further defined and explained in subsequent drawings.

In the descriptions of the embodiments in the present application, it should be noted that the indicated orientation or positional relationship is the orientation or positional relationship shown in the drawings, or the orientation or positional relationship commonly placed during the use of the applied product, or the orientation or positional relationship commonly understood by those skilled in the art, and is only for the convenience of describing the present application and simplifying the description, rather than indicating or implying that the mentioned apparatus or component needs to have a specific orientation or needs to be constructed and operated in a specific orientation. Therefore, this should not be understood as a limitation on the present application. In addition, the terms "first", "second", "third", and the like are used to distinguish descriptions only, and cannot be construed as indicating or implying relative importance.

With the development of the new energy technology, the number of devices using batteries has increased. When the electric energy of an electrical device is exhausted, the electric energy is often supplemented by connecting a charging device. For example, an electric vehicle can be connected to a charging pile for charging. Compared with the manner of supplementing electric energy by connecting a charging device such as a charging pile, the electric energy can be faster supplemented by swapping a battery. At present, there is also a battery swapping system specially used for swapping batteries. The battery swapping system is provided with a battery picking and placing apparatus and a movable battery swapping apparatus. The battery swapping apparatus is configured to swap a battery of an electrical device.

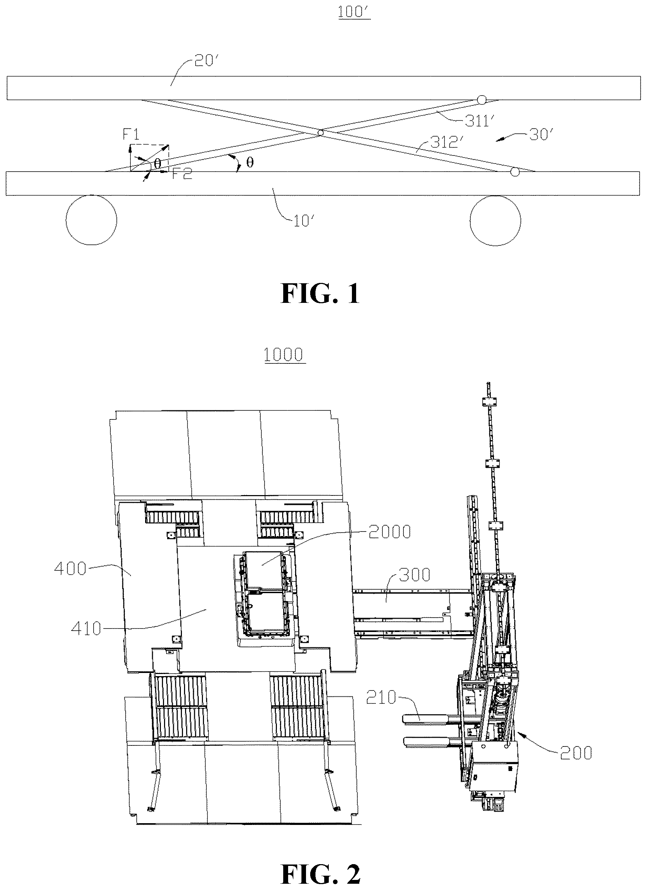

As shown in FIG. 1, a current battery swapping apparatus 100' includes a movable base 10', a locking and unlocking mechanism 20', and a scissor type lifting mechanism 30'. The locking and unlocking mechanism 20' is configured to lock a battery on an electrical device or unlock the battery from the electrical device. The scissor type lifting mechanism 30' is arranged between the movable base 10' and the locking and unlocking mechanism 20', and the scissor type lifting mechanism 30' is configured to drive the locking and unlocking mechanism 20' to move up and down. The scissor type lifting mechanism 30' includes a scissor unit 3 1' and a driving member (not shown in FIG. 1), and the scissor unit 31' includes a first scissor arm 311' and a second scissor arm 312' hinged to each other. One end of the first scissor arm 311' is hinged to the locking and unlocking mechanism 20', and the other end of the first scissor arm 311' is movably arranged on the movable base 10'. One end of the second scissor arm 312' is hinged to the movable base 10', and the other end of the second scissor arm 312' is movably arranged on the locking and unlocking mechanism 20'. The driving member is mounted on the movable base 10', and the driving member is configured to horizontally drive the first scissor arm 311' to be movably arranged at one end of the movable base 10' to horizontally move relative to the movable base 10', so that the scissor unit 3 1' performs a scissor movement to enable the locking and unlocking mechanism 20' to move up and down.

The inventors found that an included angle θ between the first scissor arm 311' and the movable base 10' increases with the rise of the locking and unlocking mechanism 20'. When the weight of a battery is definite, the weight F1 borne by the scissor type lifting mechanism 30' in the lifting direction (the load that the scissor type lifting mechanism 30' needs to overcome in the lifting direction) is constant, and then, the included angle θ between the first scissor arm 311' and the movable base 10', the weight F1 borne by the scissor type lifting mechanism 30' in the lifting direction, and the horizontal thrust F2 of the driving member meet tanθ=F1/F2. In the process of driving the locking and unlocking mechanism 20' to move up by the scissor type lifting mechanism 30', the included angle θ between the first scissor arm 311' and the movable base 10' gradually increases. When the locking and unlocking mechanism 20' is located at the lowest point, the included angle θ between the first scissor arm 311' and the movable base 10' is minimum, and tanθ is minimum. Since the F1 is constant, when the locking and unlocking mechanism 20' is located at the lowest point, the horizontal thrust F2 of the driving member is maximum. As a result, when the locking and unlocking mechanism 20' is located at the lowest point, the driving member requires a large power to meet the thrust required by the first scissor arm 311' in a horizontal direction, so the purchase cost and use cost are higher. Moreover, the size of the higher-power driving member is larger, so that the overall height of the scissor type lifting mechanism is larger.

In order to reduce the problem of high power required for the scissor type lifting mechanism to drive the locking and unlocking mechanism to move up when the locking and unlocking mechanism of the current battery swapping apparatus is located at the lowest point, the present application provides a technical solution which improves the structure of the scissor type lifting mechanism. The scissor type lifting mechanism includes a scissor unit, a driving member, a first transmission member, and a second transmission member. The first transmission member is mounted on the scissor unit and forms a slope fit with the second transmission member. The driving member is configured to drive the second transmission member to move, so as to drive the scissor unit to perform a scissor movement through the first transmission member. Since the first transmission member forms a slope fit with the second transmission member, when the driving member drives the second transmission member to move, the first transmission member and the second transmission member can slide relative to each other along the slope. An inclination angle of the slope is greater than an included angle between a scissor arm of the scissor unit and the movable base when the locking and unlocking mechanism is located at the lowest point. Therefore, the driving member can push the second transmission member to move with a smaller horizontal thrust to enable the scissor type lifting mechanism to drive the locking and unlocking mechanism to move up and down, thereby reducing the power of the driving member, and reducing the purchase cost and use cost. Furthermore, the size of the low-power driving member is smaller, thereby reducing the overall height of the scissor type lifting mechanism.

The battery swapping apparatus and battery swapping system disclosed in the embodiments of the present application can be used to, but not limited to, swap batteries of vehicles, and can also be used to swap batteries of ships, aircraft, and other electrical devices, such as electric toys, electric tools, battery cars, electric vehicles, steamships, and spacecraft. The electric toys may include fixed or mobile electric toys, such as game consoles, electric vehicle toys, electric steamship toys, and electric airplane toys. The electric tools may include fixed or mobile electric tools, such as electric machine tools and electric sweepers. The spacecraft may include airplanes, rockets, space shuttles, spaceships, and the like.

Hereinafter, taking an electrical device being a vehicle as an example, the battery swapping apparatus and the battery swapping system are described.

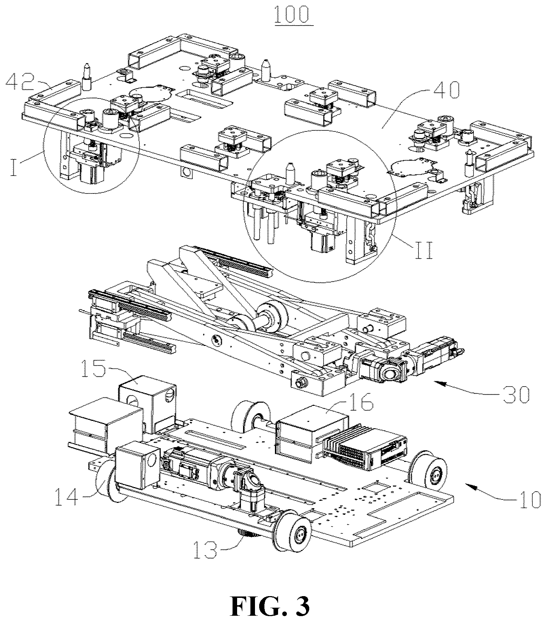

Referring to FIG. 2 and FIG. 3, a battery swapping system 1000 includes a battery swapping apparatus 100 and a battery picking and placing apparatus 200.

The battery swapping system 1000 further includes a battery charging apparatus (not shown in the figures), and the charging apparatus of the battery 2000 is configured to store the battery 2000 and charge the battery 2000. The battery picking and placing apparatus 200 may be a stacker. The battery picking and placing apparatus 200 is provided with a fork 210 (the fork 210 may also be replaced with a mechanical arm). The battery 2000 to be charged on the battery swapping apparatus 100 is taken away by the fork 210 and placed into the charging apparatus of the battery 2000 for recycling, and the fully charged battery 2000 is taken out from the charging apparatus of the battery 2000 and placed on the battery swapping apparatus 100.

In order to realize the swapping of the battery 2000 of the vehicle, it is necessary to take down the battery 2000 of which the electric energy is exhausted on the vehicle through the battery swapping apparatus 100 and transport the battery 2000 to a battery charging and discharging apparatus for charging, then transport the fully charged battery 2000 to the vehicle through the battery swapping apparatus 100, and mount the battery 2000 on the vehicle. In some embodiments, the battery swapping system further includes a track 300, and the battery swapping apparatus 100 is movably arranged on the track 300.

The battery swapping apparatus 100 reciprocates on the track 300, so that the battery swapping apparatus 100 moves between the vehicle and the battery picking and placing apparatus 200. The battery swapping apparatus 100 is configured to dismount the battery 2000 to be charged on the vehicle and transport the battery 2000 to the battery picking and placing apparatus 200 along the track 300, and mount the fully charged battery 2000 updated by the battery picking and placing apparatus 200 to the vehicle.

The battery swapping system 1000 further includes a battery swapping platform 400. The battery swapping platform 400 is located at one end of the track 300. The battery picking and placing apparatus 200 is located at the other end of the track 300. The battery swapping platform 400 is configured to park the vehicle, and the battery 2000 of the vehicle is swapped on the battery swapping platform 400. The battery swapping platform 400 is configured to lift the vehicle as a whole. The vehicle is located above the battery swapping platform 400. The battery swapping platform 400 is provided with an avoidance opening 410. A mounting position (not shown in the figures) of the battery 2000 of the vehicle corresponds to the avoidance opening 410. The battery swapping apparatus 100 is parked below the avoidance opening 410. The battery swapping mechanism on the battery swapping apparatus 100 passes through the avoidance opening 410 to dismount or mount the battery 2000. The battery swapping apparatus 100 moves between the battery swapping platform 400 and the battery picking and placing apparatus 200.

It should be noted that the mounting position of the battery 2000 refers to a space for accommodating the battery 2000, formed on the electrical device, for example, an upward recessed groove formed on a chassis of the vehicle. When the battery 2000 is located in the groove, a surface of the battery 2000 is approximately flush with other parts of the chassis.

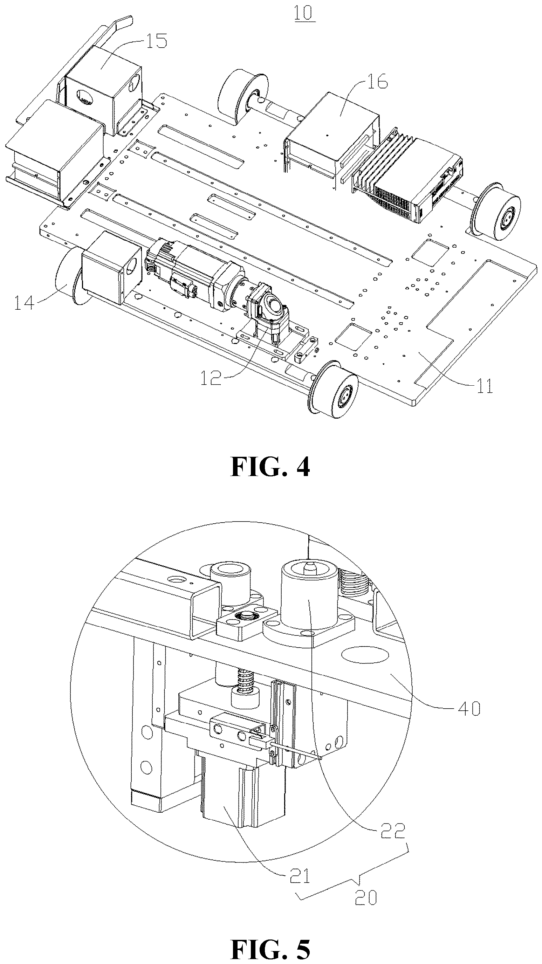

In some embodiments, the battery swapping apparatus 100 includes a movable base 10, a locking and unlocking mechanism 20 (shown in FIG. 5), and a scissor type lifting mechanism 30. The locking and unlocking mechanism 20 is configured to lock the battery 2000 on the electrical device or unlock the battery 2000 from the electrical device. The scissor type lifting mechanism 30 is arranged between the movable base 10 and the locking and unlocking mechanism 20, and the scissor type lifting mechanism 30 is configured to drive the locking and unlocking mechanism 20 to move up and down. The scissor type lifting mechanism 30 includes a scissor unit 31, a driving member 32, a first transmission member 33, and a second transmission member 34. The first transmission member 33 is mounted on the scissor unit 31 and forms a slope 341 fit with the second transmission member 34. The driving member 32 is configured to drive the second transmission member 34 to move, so as to drive the scissor unit 31 to perform a scissor movement through the first transmission member 33.

Referring to FIG. 3 and FIG. 4, the movable base 10 includes a bottom plate 11, a driving motor 12, and a gear 13. The driving motor 12 is mounted on the bottom plate 11, the gear 13 is mounted at an output end of the driving motor 12, and the gear 13 is meshed with a rack, where the rack may be fixed to the ground or fixed to the track 300. The driving motor 12 drives the gear 13 to rotate. Since the gear 13 is meshed with the rack, during the rotation of the gear 13, the movable base 10 can be driven to move along an extension direction of the rack, and then, the battery swapping apparatus 100 moves along the extension direction of the rack. The extension direction of the rack is the same as the extension direction of the track 300.

In some embodiments, the movable base 10 further includes a roller 14. The roller 14 fits with the track 300. The driving motor 12 drives the gear 13 to rotate, and the roller 14 rolls along the track 300, so that the battery swapping apparatus 100 moves along the track 300. Of course, power components may also be provided for driving the roller 14 to rotate. The driving motor 12 may also be replaced with a drive motor, a hydraulic driving rod, or the like.

The movable base 10 further includes a distribution box 15, and the distribution box 15 is mounted on the bottom plate 11. An external power line supplies power to each motor (such as the driving motor 12) and other power-consuming components through the distribution box 15.

The movable base 10 further includes a controller 16 for controlling the start or stop of each motor (such as the driving motor 12), so as to reduce the number of communication cables for external output.

According to different connection relationships between the battery 2000 and the electrical device, the locking and unlocking mechanism 20 is correspondingly arranged in different forms. For example, in some embodiments, as shown in FIG. 5, the battery 2000 is provided with a fastening bolt, the chassis of the vehicle is provided with a movable nut, and the fastening bolt is in threaded fit with the movable nut. The locking and unlocking mechanism 20 is configured to screw the fastening bolt into the movable nut to fixedly mount the battery 2000 in the mounting position of the battery 2000, and the locking and unlocking mechanism is configured to unscrew the fastening bolt from the movable nut to unlock the battery 2000 from the vehicle. For example, the locking and unlocking mechanism 20 includes a locking and unlocking driving motor 21 and a bolt sleeve 22. One end of the bolt sleeve 22 is connected to an output end of the locking and unlocking driving motor 21, and the other end of the bolt sleeve 22 fits with the fastening bolt. The locking and unlocking driving motor 21 drives the bolt sleeve 22 to rotate forward or backward to drive the fastening bolt to be screwed into or unscrewed from the movable nut. In other embodiments, the locking and unlocking mechanism 20 may also adopt other manners of locking and unlocking the battery 2000.

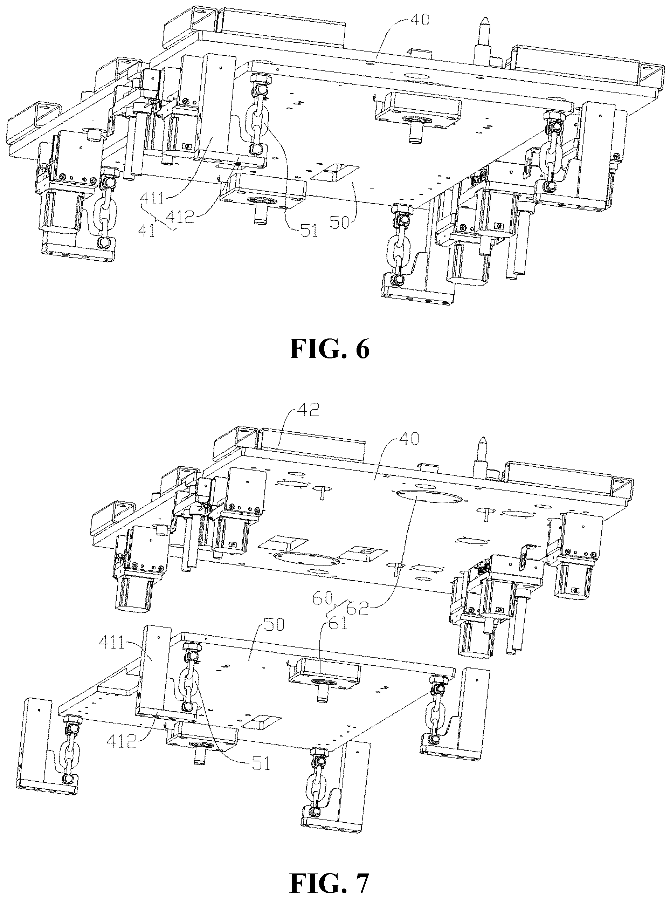

As shown in FIG. 6, in some embodiments, the battery swapping apparatus 100 further includes a floating platform 40 and a lifting platform 50. The locking and unlocking mechanism 20 is arranged on the floating platform 40. The floating platform 40 is floatingly connected to the lifting platform 50 and located above the lifting platform 50. The scissor type lifting mechanism 30 is arranged between the movable base 10 and the lifting platform 50. The scissor type lifting mechanism 30 is configured to drive the lifting platform 50 to move up and down so as to drive the floating platform 40 to move up and down, so that the locking and unlocking mechanism 20 arranged on the floating platform 40 can move up and down.

The floating platform 40 is floatingly connected to the lifting platform 50, so that the floating platform 40 can move relative to the lifting platform 50 in a horizontal plane, so as to facilitate the positioning of the structure arranged on the floating platform 40, the electrical device, and the battery 2000 mounted on the electrical device.

There are many ways to achieve floating connection between the floating platform 40 and the lifting platform 50. For example, as shown in FIG. 6, multiple mounting members 41 are arranged at intervals below the floating platform 40. The mounting member 41 includes a first connecting part 411 and a second connecting part 412. One end of the first connecting part 411 is connected to the floating platform 40, and the other end of the first connecting part 411 extends below the lifting platform 50 and is connected to the second connecting part 412. The second connecting part 412 and the first connecting part 411 form an L-shaped mounting member 41. The lifting platform 50 is connected to multiple floating chains 51. The number of the floating chains 51 is the same as the number of the mounting members 41. The floating chains 51 are arranged corresponding to the mounting members 41 one by one. One end of the floating chain 51 is connected to the lifting platform 50, and the other end of the floating chain 51 is connected to the second connecting part 412 of the corresponding mounting member 41. In the absence of other external forces, the length of the floating chain 51 makes the floating platform 40 and the lifting platform 50 suspended without contact, so that the floating platform 40 can float horizontally relative to the lifting platform 50, so as to avoid floating obstruction due to frictional contact between the floating platform 40 and the lifting platform 50 when the floating platform 40 floats horizontally relative to the lifting platform 50.

The scissor type lifting mechanism 30 performs a scissor movement through the scissor unit 31 to drive the locking and unlocking mechanism 20 to move up and down, and the scissor movement performed by the scissor unit 31 is realized by driving the second transmission member 34 to move through the driving member 32 after the first transmission member 33 forms a slope 341 fit with the second transmission member 34. Since the first transmission member 33 forms a slope fit with the second transmission member 34, when the driving member 32 drives the second transmission member 34 to move, the first transmission member 33 and the second transmission member 34 can slide relative to each other along the slope 341. An inclination angle of the slope 341 is greater than an included angle between a scissor arm of the scissor unit 31 and the movable base 10 when the locking and unlocking mechanism 20 is located at the lowest point. Therefore, the driving member 32 can push the second transmission member 34 to move with a smaller horizontal thrust to enable the scissor type lifting mechanism 30 to drive the locking and unlocking mechanism 20 to move up and down, thereby reducing the power of the driving member 32, and reducing the purchase cost and use cost. Furthermore, the size of the low-power driving member 32 is smaller, thereby reducing the overall height of the scissor type lifting mechanism 30.

As shown in FIG. 7, in some embodiments, the battery swapping apparatus 100 further includes a locking assembly 60, and the locking assembly 60 is configured to lock the floating platform 40 to the lifting platform 50 or release the floating platform 40 from the lifting platform 50.

The floating platform 40 being locked to the lifting platform 50 means that the floating platform 40 does not move relative to the lifting platform 50, and it is not limited that the floating platform 40 is fixed to the lifting platform 50. The floating platform 40 can be suspended and stationary relative to the lifting platform 50, that is, the floating platform 40 is not in direct contact with the lifting platform 50, but the floating platform 40 does not move relative to the lifting platform 50. The floating platform 40 being released from the lifting platform 50 means that the floating platform 40 can move relative to the lifting platform 50 in a plane parallel to the plane where the lifting platform 50 is located.

When it is necessary to position the floating platform 40 and the electrical device, the locking assembly 60 releases the floating platform 40 from the lifting platform 50, so that the floating platform 40 can float relative to the lifting platform 50 to facilitate accurate positioning fit between the structure on the floating platform 40 and the electrical device. In the process of locking the battery 2000 to the electrical device or unlocking the battery 2000 from the electrical device by the locking and unlocking mechanism 20 and in the process of transporting the battery 2000 by the battery swapping apparatus 100, the locking assembly 60 locks the floating platform 40 to the lifting platform 50, so that the battery 2000 can be stably placed on the floating platform 40 to improve the stability of the disassembly and assembly of the battery 2000 and the stability of transport of the battery 2000.

There are many structural forms of the locking assembly 60. For example, in some embodiments, the locking assembly 60 includes an electromagnet 61 and a magnet attraction plate 62. The electromagnet 61 is arranged on one of the lifting platform 50 and the floating platform 40, and the magnet attraction plate 62 is arranged on the other one of the lifting platform 50 and the floating platform 40. Through the fit between the electromagnet 61 and the magnet attraction plate 62, the action response of locking the floating platform 40 to the lifting platform 50 or releasing the floating platform 40 from the lifting platform 50 is fast, and the floating platform 40 can be locked to the lifting platform 50 or the floating platform 40 can be released from the lifting platform 50 in time, thereby improving the swapping efficiency of the battery 2000.

In some embodiments, the moving direction of the second transmission member 34 is perpendicular to the lifting direction of the locking and unlocking mechanism 20.

After the scissor type lifting mechanism 30 drives the locking and unlocking mechanism 20 to move up and down, the height of the entire battery swapping apparatus 100 can be changed. It can be understood that the lifting direction of the locking and unlocking mechanism 20 is consistent with the height direction of the battery swapping apparatus 100. The moving direction of the second transmission member 34 is parallel to the plane where the bottom plate 11 of the movable base 10 is located. When the plane where the bottom plate 11 of the movable base 10 is located is parallel to the horizontal plane, the scissor type lifting mechanism 30 drives the locking and unlocking mechanism 20 to move along a vertical direction.

The driving member 32 driving the second transmission member 34 to move may be that the second transmission member 34 is movably arranged on the bottom plate 11 of the movable base 10, and the driving member 32 drives the second transmission member 34 to linearly move on the bottom plate 11; or may be that the second transmission member 34 is suspended relative to the bottom plate 11, and the driving member 32 drives the second transmission member 34 to move relative to the bottom plate 11 of the movable base 10.

The moving direction of the second transmission member 34 is perpendicular to the lifting direction of the locking and unlocking mechanism 20, so that the first transmission member 33 and the second transmission member 34 can support the locking and unlocking mechanism 20 in the lifting direction of the locking and unlocking mechanism 20, and thus, the locking and unlocking mechanism 20 can stably move up and down.

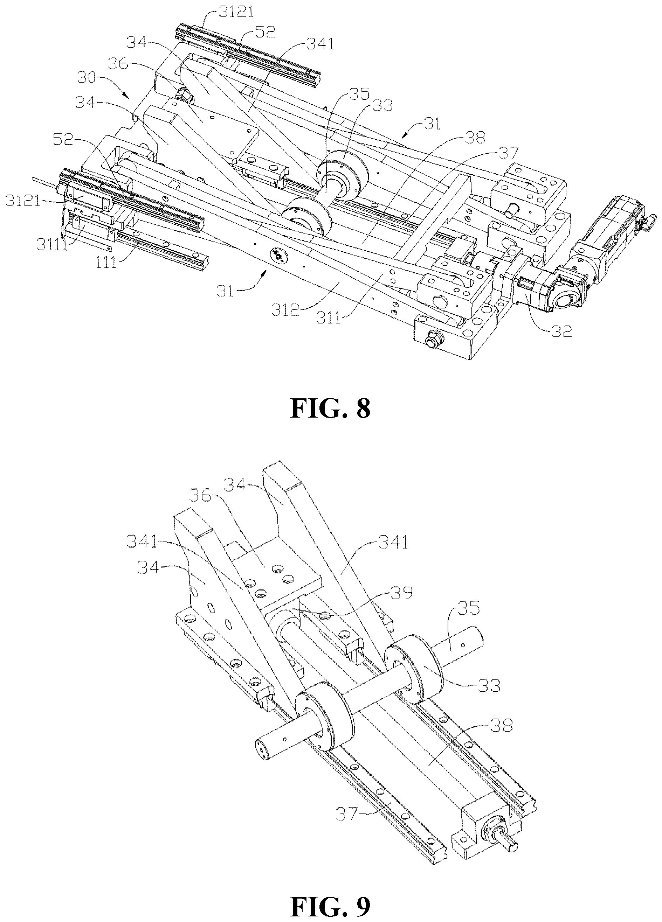

Referring to FIG. 3 and FIG. 8, in some embodiments, the scissor unit 31 includes a first scissor arm 311 and a second scissor arm 312 hinged to each other. The scissor type lifting mechanism 30 further includes a mounting shaft 35. The mounting shaft 35 is connected to the hinge joint between the first scissor arm 311 and the second scissor arm 312 and extends along the hinge axis of the first scissor arm 311 and the second scissor arm 312. The first transmission member 33 is mounted on the mounting shaft 35.

The first scissor arm 311 and the second scissor arm 312 are crosswise hinged. One end of the first scissor arm 311 is hinged to the locking and unlocking mechanism 20, and the other end of the first scissor arm 311 is movably arranged on the movable base 10. One end of the second scissor arm 312 is hinged to the movable base 10, and the other end of the second scissor arm 312 is movably arranged on the locking and unlocking mechanism 20. The driving member 32 is mounted on the movable base 10.

Referring to FIG. 3, FIG. 8, and FIG. 9, the bottom plate 11 of the movable base 10 is provided with a first sliding rail 111, one end of the first scissor arm 311 is hinged with a first sliding block 3111, and the first sliding block 3111 is in sliding fit with the first sliding rail 111. The lifting platform 50 is provided with a second sliding rail 52, one end of the second scissor arm 312 is hinged with a second sliding block 3121, and the second sliding block 3121 is in sliding fit with the second sliding rail 52. The second transmission member 34 is in slope 341 fit with the first transmission member 33 mounted on the mounting shaft 35. When the second transmission member 34 moves, the first transmission member 33 drives the mounting shaft 35 to move up and down, the first sliding block 3111 moves along the first sliding rail 111, the second sliding block 3121 moves along the second sliding rail 52, and the first scissor arm 311 and the second scissor arm 312 rotate relative to each other, so that the scissor unit 31 performs a scissor movement.

The mounting shaft 35 is connected to the hinge joint between the first scissor arm 311 and the second scissor arm 312 and extends along the hinge axis of the first scissor arm 311 and the second scissor arm 312. The first transmission member 33 is mounted on the mounting shaft 35. Since the first transmission member 33 forms a slope 341 fit with the second transmission member 34, when the driving member 32 drives the second transmission member 34 to move, the first transmission member 33 and the second transmission member 34 can slide relative to each other along the slope 341 to drive the mounting shaft 35 to move up and down, and the mounting shaft 35 moving up and down can drive the scissor unit 31 to perform a scissor movement to enable the scissor type lifting mechanism 30 to drive the locking and unlocking mechanism 20 to move up and down. The driving manner is simple, and the power consumption is smaller.

Continuing to refer to FIG. 3, FIG. 8, and FIG. 9, in some embodiments, the scissor type lifting mechanism 30 includes two scissor units 31, the two scissor units 31 are arranged opposite to each other, the mounting shaft 35 is arranged between the two scissor units 31, and two ends of the mounting shaft 35 are respectively connected to the two scissor units 31.

The arrangement direction of the two scissor units 31 is perpendicular to the moving direction of the second transmission member 34, and the axis direction of the mounting shaft 35 is consistent with the arrangement direction of the two scissor units 31. In other embodiments, the scissor type lifting mechanism 30 may also be provided with one scissor unit 31, or three or more scissor units 31.

Two scissor units 31 are arranged at an interval between the movable base 10 and the locking and unlocking mechanism 20, so that the force on the locking and unlocking mechanism 20 can be uniform, and the locking and unlocking mechanism 20 can stably move up and down.

The scissor type lifting mechanism 30 includes two scissor units 31. The mounting shaft 35 is arranged between the two scissor units 31. Two ends of the mounting shaft 35 are respectively connected to the two scissor units 31. The mounting shaft 35 moving up and down can drive the two scissor units 31 to perform a scissor movement. It is not necessary to provide a corresponding mounting shaft 35 for each scissor unit 31. The mounting shaft 35 is located between the two scissor units 31, two ends of the mounting shaft 35 are respectively connected to the two scissor units 31, and then, the first transmission member 33 mounted on the mounting shaft 35 is located between the two scissor units 31, thus simplifying the structure and volume of the scissor type lifting mechanism 30, and being beneficial for miniaturization of the battery swapping apparatus 100.

In some embodiments, two first transmission members 33 are provided, and the two first transmission members 33 are arranged at two ends of the mounting shaft 35 in an axial direction of the mounting shaft 35 at an interval.

In other embodiments, one first transmission member 33 or three or more first transmission members 33 may be provided. In an embodiment where one first transmission member 33 is provided, the size of the first transmission member along the axial direction of the mounting shaft 35 may be designed to be larger to provide a sufficient connection length between the mounting shaft 35 and the first transmission member 33, thereby playing a role in enhancing the strength of the mounting shaft 35.

The two first transmission members 33 are arranged at two ends of the mounting shaft 35 in an axial direction of the mounting shaft 35 at an interval, and each first transmission member 33 forms a slope 341 fit with the second transmission member 34 to drive the mounting shaft 35 to move up and down, so that the force on the mounting shaft 35 in the axial direction is balanced to enable the locking and unlocking mechanism 20 to stably move up and down.

Referring to FIG. 8 and FIG. 9, in some embodiments, two second transmission members 34 are provided, the two second transmission members 34 are arranged corresponding to the two first transmission members 33, the scissor type lifting mechanism 30 further includes a connecting element 36, and the connecting element 36 is configured to connect the two second transmission members 34.

The two second transmission members 34 are arranged at an interval along the axial direction of the mounting shaft 35, and the two second transmission members 34 are located between the two scissor units 31, so that the size of the scissor type lifting mechanism 30 in the axial direction of the mounting shaft 35 is reduced, and the structure of the battery swapping apparatus 100 is more compact.

The two second transmission members 34 are arranged corresponding to the two first transmission members 33, and the second transmission member 34 forms a slope fit with the corresponding first transmission member 33 to avoid an excessive load on the second transmission member 34 due to the slope 341 fit of the two first transmission members 33 with the same second transmission member 34, thereby reducing the risk of damage to the second transmission member 34 due to an overload. The two second transmission members 34 are connected by the connecting element 36, so that the structural stability of the second transmission member 34 can be enhanced, and the synchronous movement of the two second transmission members 34 can be ensured.

In some embodiments, the first transmission member 33 is a roller 14, and the second transmission member 34 has a slope 341 that fits with the roller 14.

The inclination angle between the slope 341 and the bottom plate 11 of the movable base 10 may be constant or gradually varied. The inclination angle between the slope 341 and the bottom plate 11 refers to an acute inclination angle between the slope 341 and the bottom plate 11. The inclination angle between the slope 341 and the bottom plate 11 is greater than the inclination angle between the first scissor arm 311 and the bottom plate 11. As shown in FIG. 8 and FIG. 9, the inclination angle between the slope 341 and the bottom plate 11 is constant.

In other embodiments, the surface of the second transmission member 34 for fitting with the first transmission member 33 may also be a curved surface. Cross sections at different positions of the curved surface may have different inclination angles relative to the bottom plate 11 of the movable base 10, so that the scissor type lifting mechanism 30 has different lifting speeds.

The roller 14 is rotationally mounted on the mounting shaft 35, and is coaxial with the mounting shaft 35. The circumferential surface of the roller 14 is in rolling contact with the slope 341 of the second transmission member 34. In other embodiments, the first transmission member 33 may also be provided with a slope 341, and the slope 341 of the first transmission member 33 is in contact with the slope 341 of the second transmission member 34 to form a slope 341 fit. The first transmission member 33 is a roller 14, and the roller 14 fits with the slope 341 of the second transmission member 34, so that the resistance when the second transmission member 34 and the first transmission member 33 slide relative to each other can be reduced, the energy consumption of the locking and unlocking mechanism 20 when moving up and down can be reduced, and the locking and unlocking mechanism 20 can stably move up and down.

In some embodiments, the scissor type lifting mechanism 30 further includes a guide rail 37. The guide rail 37 is arranged on the movable base 10. The second transmission member 34 is slidably arranged on the guide rail 37. The driving member 32 is configured to drive the second transmission member 34 to move along the guide rail 37.

The guide rail 37 is fixed on the bottom plate 11 of the movable base 10. In an embodiment where two second transmission members 34 are provided, two guide rails 37 are provided, and the two second transmission members 34 are slidably arranged on the two guide rails 37 respectively.

The second transmission member 34 is slidably arranged on the guide rail 37, and the driving member 32 drives the second transmission member 34 to slide along the guide rail 37, so as to ensure that the second transmission member 34 moves along a fixed trajectory, thereby improving the stability of the second transmission member 34, and further improving the stability of the locking and unlocking mechanism 20 when moving up and down.

In some embodiments, the scissor type lifting mechanism 30 further includes a lead screw 38 and a nut 39. The nut 39 sleeves the lead screw 38 and is in threaded fit with the lead screw 38. The driving member 32 is configured to drive the lead screw 38 to rotate. The second transmission member 34 is fixed to the nut 39.

In an embodiment where two second transmission members 34 are provided, the lead screw 38 and the nut 39 are located between the two second transmission members 34.

The second transmission member 34 may be directly fixed to the nut 39 or indirectly fixed to the nut 39. In an embodiment where the scissor type lifting mechanism 30 further includes a connecting element 36, the connecting element 36 is fixed to the nut 39, and the two second transmission members 34 are connected through the connecting element 36, which is equivalent to that the two second transmission members 34 are indirectly fixed to the nut 39 through the connecting element 36.

In other embodiments, the second transmission member 34 may also be driven through linear driving structures such as an air cylinder and a hydraulic cylinder.

The nut 39 is in threaded connection with the lead screw 38. The second transmission member 34 is fixed to the nut 39. The driving member 32 drives the lead screw 38 to rotate, and the rotation of the lead screw 38 can drive the nut 39 to move linearly so as to drive the second transmission member 34 to move linearly. The driving manner is simple, so that the structure of the battery swapping apparatus 100 is simple and compact.

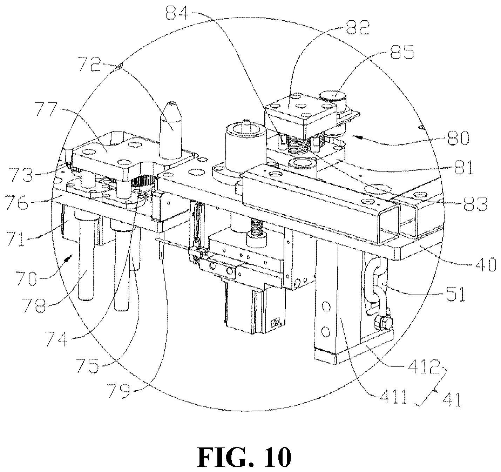

As shown in FIG. 10, in some embodiments, the battery swapping apparatus 100 further includes a positioning mechanism 70, and the positioning mechanism 70 is configured to position the floating platform 40 and the electrical device. The positioning mechanism 70 includes a positioning member 72 and a driving component 71. The driving component 71 is configured to drive the positioning member 72 to move along the height direction of the battery swapping apparatus 100, so as to adjust the height of the positioning member 72. Since the floating platform 40 can float relative to the electrical device, the floating platform 40 and the electrical device are fixed through the positioning mechanism 70, so as to facilitate the locking and unlocking mechanism 20 to lock the battery 2000 to the electrical device or unlock the battery 2000 from the electrical device, and improve the success rate of the disassembly and assembly of the battery 2000.

In some embodiments, the positioning mechanism 70 further includes a transmission component, and the driving member 32 is in transmission connection with the positioning member 72 through the transmission component, so as to convert the rotation of the output end of the driving member 32 into the linear movement of the positioning member 72. For example, the transmission component includes a first gear 73, a second gear 74, and a lead screw 75. The first gear 73 is meshed with the second gear 74. The first gear 73 is connected to the output end of the driving member 32. The second gear 74 sleeves the lead screw 75 and is in threaded connection with the lead screw 75. The positioning member 72 is connected to the lead screw 75. The rotation axis of the first gear 73, the rotation of the second gear 74, and the axis of the lead screw 75 are consistent with the height direction of the battery swapping apparatus 100.

In some embodiments, the positioning mechanism 70 further includes a first mounting seat 76, a connecting plate 77, and a first guide shaft 78. The mounting seat is fixed to the floating platform 40. The driving member 32, the first gear 73, and the second gear 74 are mounted on the mounting seat. The connecting plate 77 is connected to the lead screw 75. The positioning member 72 is connected to the connecting plate 77. The first guide shaft 78 slidably passes through the first mounting seat 76 and is connected to the connecting plate 77. The first guide shaft 78 can play a guide role when the positioning member 72 moves along the height direction of the battery swapping apparatus 100 to improve the moving stability of the positioning member 72, thereby improving the accuracy of positioning fit between the positioning member 72 and the electrical device.

In some embodiments, the positioning mechanism 70 further includes a first detection unit 79 for detecting the height information of the positioning member 72. The height information of the positioning member 72 is detected through the first detection unit 79, so a reference can be provided for judging whether the positioning member 72 realizes a positioning fit with the electrical device, so as to ensure the positioning fit between the positioning member 72 and the electrical device. The height information of the positioning member 72 is detected through the first detection unit 79, so insufficient height adjustment or excessive adjustment of the positioning member 72 can also be avoided.

Continuing to refer to FIG. 10, in some embodiments, the battery swapping apparatus 100 further includes a supporting mechanism 80. The supporting mechanism 80 includes a second mounting seat 81, a supporting member 82, and an elastic member 83. The second mounting seat 81 is fixed to the floating platform 40. The elastic member 83 is elastically supported between the supporting member 82 and the second mounting seat 81. The supporting member 82 is configured to support the battery 2000. Since the elastic member 83 is elastically supported between the supporting member 82 and the second mounting seat 81, and the supporting member 82 is configured to support the battery 2000, when the electrical device or the battery 2000 has a certain inclination, the supporting mechanism 80 can be compressed through the elastic member 83 to adapt to the inclination of the electrical device or the battery 2000 to keep the fit between the battery 2000 and the electrical device, so as to improve the success rate of mounting or dismounting the battery 2000.

In some embodiments, the supporting mechanism 80 further includes a second guide shaft 84. The second guide shaft 84 slidably passes through the second mounting seat 81 and is connected to the supporting member 82. The second guide shaft 84 can play a guide role during the compression or extension process of the elastic member 83 to ensure that the elastic member 83 is compressed or extended along a fixed path, and ensure that the supporting member 82 moves along a fixed path, thereby improving the moving stability of the supporting member 82, and further improving the supporting stability of the supporting member 82 for the battery 2000.

In some embodiments, the supporting mechanism 80 further includes a second detection unit 85. The second detection unit 85 is configured to detect whether the supporting member 82 is in contact with the battery 2000.

The floating platform is generally provided with three or more second detection units 85 which can detect whether there is a battery 2000 on the supporting member 82. After the locking and unlocking mechanism 20 is configured to mount or dismount the battery 2000 and descends, if multiple second detection units 85 have inconsistent signals, it indicates that the battery 2000 is not completely locked or unlocked, and the battery 2000 inclines, so the battery swapping apparatus 100 stops descending, performs a locking or unlocking operation again, or issues a fault alarm. The second detection unit 85 can prevent the battery 2000 from falling when the battery swapping apparatus 100 descends in a case that only one side of the battery 2000 is locked or unlocked.

Whether the supporting member 82 is in contact with the battery 2000 can be detected through the second detection unit 85. If the supporting member 82 is not in contact or not in full contact with the battery 2000, the supporting member 82 can be adjusted to be in contact with the battery 2000, thereby improving the success rate of unlocking the battery 2000 from the electrical device.

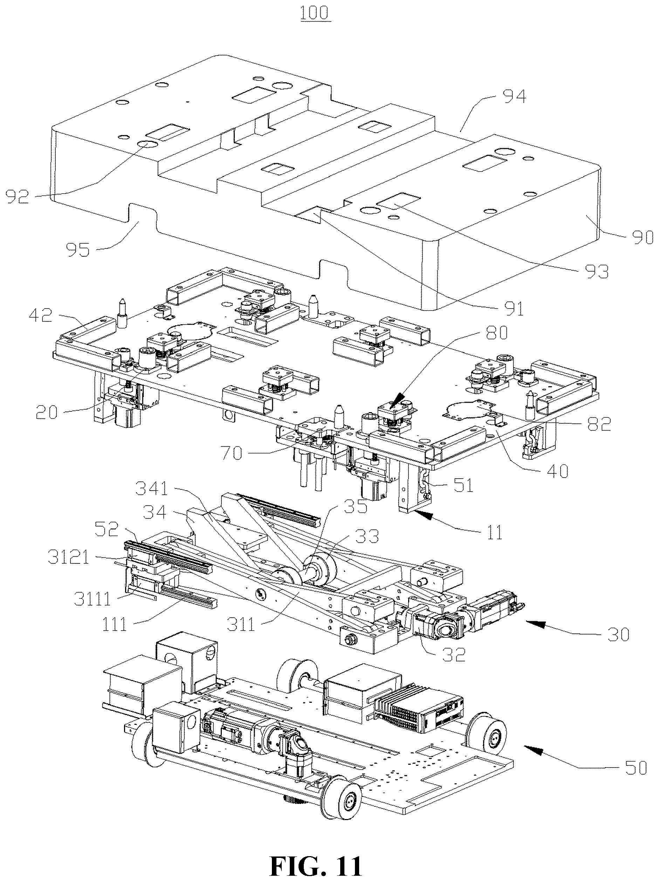

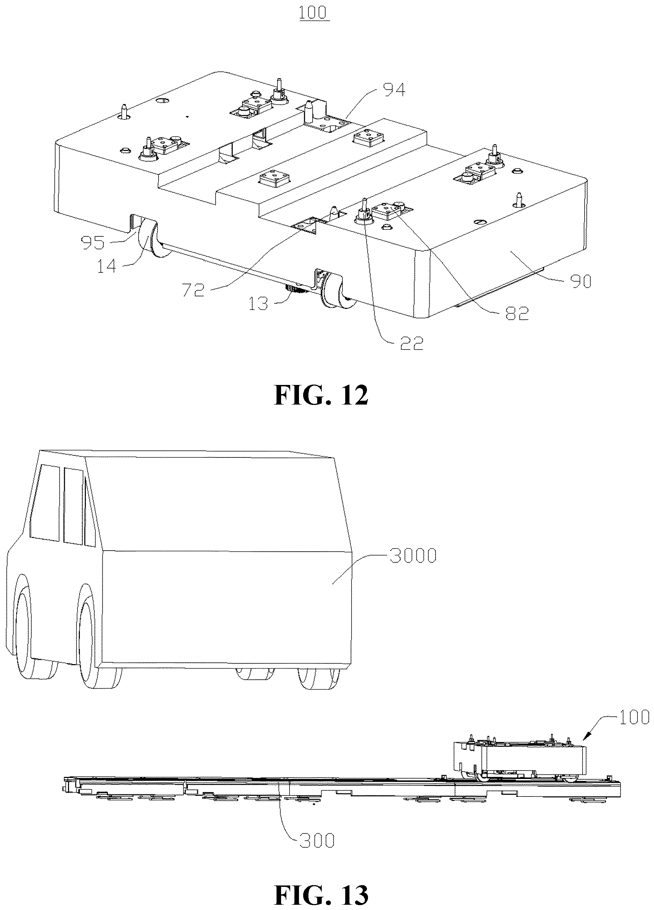

As shown in FIG. 11 and FIG. 12, in some embodiments, the battery swapping apparatus 100 further includes a protective enclosure 90. The protective enclosure 90 covers the floating platform 40 and is fixed to a fixing block 42 arranged on the floating platform 40. The appearance can be clean, and the battery swapping apparatus 100 can be prevented from being contaminated by water or dust.

The protective enclosure 90 is provided with a first opening 91 for the positioning member 72 to extend, a second opening 92 for the locking and unlocking mechanism 20 to extend, and a third opening 93 for the supporting member 82 to extend. The driving member 32 drives the positioning member 72 to extend out of the first opening 91 to form a positioning fit with the electrical apparatus to position the floating platform 40 and the electrical device, drives the locking and unlocking mechanism to extend out of the second opening 92 to lock the battery 2000 to the electrical device or unlock the battery 2000 from the electrical device, and drives the supporting member 82 to extend out of the third opening 93 to support the battery 2000.

An outer surface facing the protective enclosure 90 is further provided with a slot 94. The slot 94 is used for insertion of the fork 210 to pick and place the battery 2000. The protective enclosure 90 is further provided with a notch 95 for avoiding the roller 14 of the movable base 10.

An embodiment of the present application provides a battery swapping apparatus 100. The battery swapping apparatus 100 includes a movable base 10, a locking and unlocking mechanism 20, a scissor type lifting mechanism 30, a lead screw 38, and a nut 39. The locking and unlocking mechanism 20 is configured to lock a battery 2000 to an electrical device or unlock the battery 2000 from the electrical device. The scissor type lifting mechanism 30 is arranged between the movable base 10 and the locking and unlocking mechanism 20, and the scissor type lifting mechanism 30 is configured to drive the locking and unlocking mechanism 20 to move up and down. The nut 39 sleeves the lead screw 38 and is in threaded fit with the lead screw 38, and the driving member 32 is configured to drive the lead screw 38 to rotate.

The scissor type lifting mechanism 30 includes two scissor units 31, a driving member 32, two first transmission members 33, and two second transmission members 34. The two scissor units 31 are arranged opposite to each other. The scissor unit 31 includes a first scissor arm 311 and a second scissor arm 312 hinged to each other. The scissor type lifting mechanism 30 further includes a mounting shaft 35. The mounting shaft 35 is arranged between the two scissor units 31. The mounting shaft 35 is connected to the hinge joint between the first scissor arm 311 and the second scissor arm 312 and extends along the hinge axis of the first scissor arm 311 and the second scissor arm 312. The first transmission member 33 is mounted on the mounting shaft 35.

The first transmission member 33 is a roller 14 rotationally mounted on the mounting shaft 35, and the second transmission member 34 has a slope 341 that fits with the roller 14. The second transmission member 34 is fixed to the nut 39.

When it is necessary to drive the locking and unlocking mechanism 20 to move up, the driving member 32 drives the lead screw 38 to rotate forward, the nut 39 moves forward along the lead screw 38, and the roller 14 performs a "climbing" movement relative to the slope 341 of the second transmission member 34, so that the mounting shaft 35 moves up, and the scissor unit 31 performs a scissor movement, so as to enable the scissor type lifting mechanism 30 to drive the locking and unlocking mechanism 20 to move up.

When it is necessary to drive the locking and unlocking mechanism 20 to move down, the driving member 32 drives the lead screw 38 to rotate backward, the nut 39 moves backward along the lead screw 38, and the roller 14 performs a "downhill" movement relative to the slope 341 of the second transmission member 34, so that the mounting shaft 35 moves down, and the scissor unit 31 performs a scissor movement, so as to enable the scissor type lifting mechanism 30 to drive the locking and unlocking mechanism 20 to move down.

An embodiment of the present application further provides a battery swapping system 1000. The battery swapping system 1000 includes a track 300, a battery swapping platform 400, a battery picking and placing apparatus 200, and a battery swapping apparatus 100 provided in any of the above embodiments. The battery swapping apparatus 100 is movably arranged on the track 300. The battery swapping platform 400 is located at one end of the track 300. The battery picking and placing apparatus 200 is located at the other end of the track 300.

The battery swapping platform 400 is configured to park the vehicle, and the battery 2000 of the vehicle is swapped on the battery swapping platform 400. The battery swapping platform 400 is configured to lift the vehicle as a whole, and the vehicle is located above the battery swapping platform 400. The battery picking and placing apparatus 200 is configured to take the battery 2000 to be charged on the battery swapping apparatus 100 away or place the battery 2000 on the battery swapping apparatus 100.

The battery 2000 of which the electric energy is exhausted is taken down from a vehicle 3000 to explain the working process of the battery swapping system 1000.

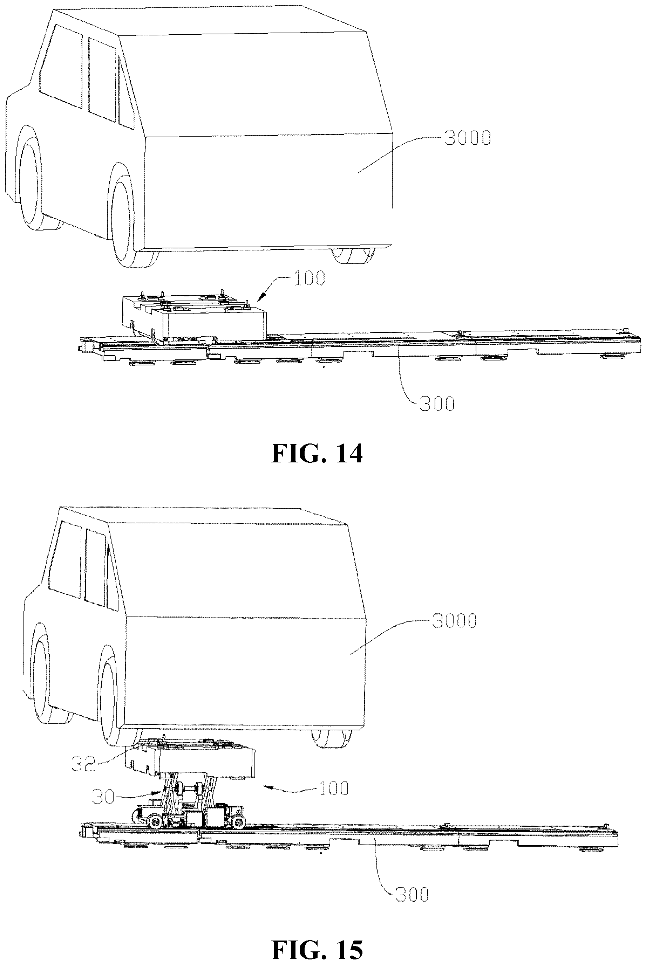

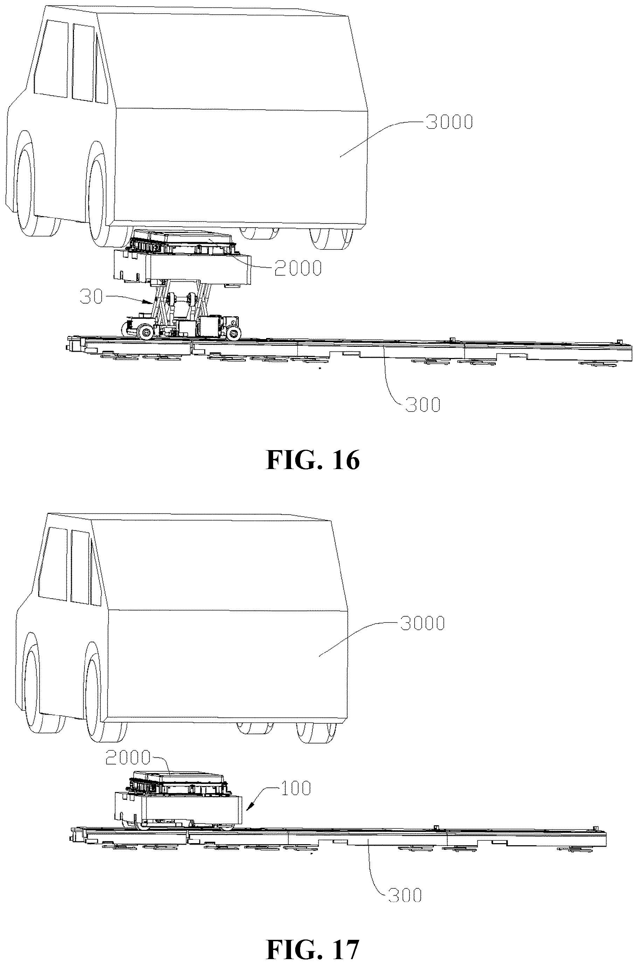

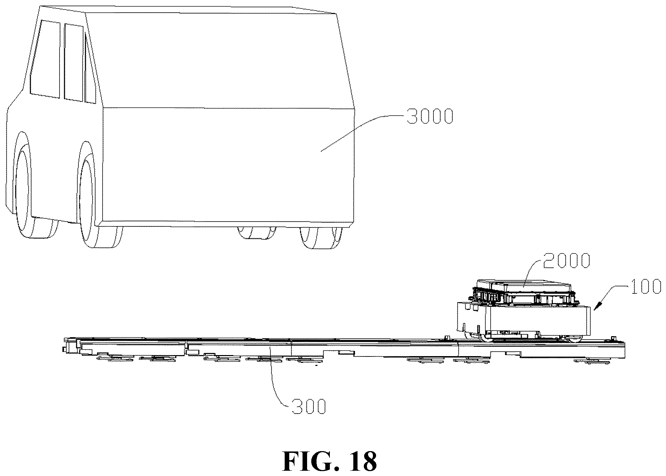

As shown in FIG. 13 to FIG. 18, the vehicle 3000 is parked on the battery swapping platform 400, and the vehicle 3000 is lifted off the ground through the battery swapping platform 400. The battery swapping apparatus 100 moves along the track 300 to a position facing the battery 2000 below the vehicle 3000. The scissor type lifting mechanism 30 drives the locking and unlocking mechanism 20 to move up to be in contact with the battery 2000, the locking and unlocking mechanism 20 unlocks the battery 2000 from the vehicle 3000, and then, the battery 2000 completely falls to the battery swapping apparatus 100. After the battery 2000 completely falls to the battery swapping apparatus 100, the scissor type lifting mechanism 30 drives the locking and unlocking mechanism 20 to move down, so that the battery 2000 is completely detached from the vehicle 3000. The battery swapping apparatus 100 moves along the track 300 to the battery picking and placing apparatus 200, and the battery 2000 on the battery swapping apparatus 100 is taken down by the battery picking and placing apparatus 200.

The above descriptions are merely preferred embodiments of the present application and are not intended to limit the present application. For those skilled in the art, the present application may have various modifications and changes. Any modifications, equivalent replacements, improvements, and the like, made within the spirit and principle of the present application shall be included within the protection scope of the present application.

## Claims

1. A battery swapping apparatus for swapping a battery of an electrical device, comprising:
a movable base;
a locking and unlocking mechanism, configured to lock the battery to the electrical device or unlock the battery from the electrical device; and
a scissor type lifting mechanism, arranged between the movable base and the locking and unlocking mechanism, and configured to drive the locking and unlocking mechanism to move up and down;
wherein the scissor type lifting mechanism comprises a scissor unit, a driving member, a first transmission member, and a second transmission member, the first transmission member is mounted on the scissor unit and forms a slope fit with the second transmission member, and the driving member is configured to drive the second transmission member to move, so as to drive the scissor unit to perform a scissor movement through the first transmission member.

2. The battery swapping apparatus according to claim 1, wherein the moving direction of the second transmission member is perpendicular to the lifting direction of the locking and unlocking mechanism.

3. The battery swapping apparatus according to claim 1 or 2, wherein the scissor unit comprises a first scissor arm and a second scissor arm hinged to each other, the scissor type lifting mechanism further comprises a mounting shaft, the mounting shaft is connected to the hinge joint between the first scissor arm and the second scissor arm and extends along the hinge axis of the first scissor arm and the second scissor arm, and the first transmission member is mounted on the mounting shaft.

4. The battery swapping apparatus according to claim 3, wherein the scissor type lifting mechanism comprises two scissor units, the two scissor units are arranged opposite to each other, the mounting shaft is arranged between the two scissor units, and two ends of the mounting shaft are respectively connected to the two scissor units.

5. The battery swapping apparatus according to claim 4, wherein two first transmission members are provided, and the two first transmission members are arranged at two ends of the mounting shaft in an axial direction of the mounting shaft at an interval.

6. The battery swapping apparatus according to claim 5, wherein two second transmission members are provided, the two second transmission members are arranged corresponding to the two first transmission members, the scissor type lifting mechanism further comprises a connecting element, and the connecting element is configured to connect the two second transmission members.

7. The battery swapping apparatus according to any one of claims 1 to 6, wherein the first transmission member is a roller, and the second transmission member has a slope that fits with the roller.

8. The battery swapping apparatus according to any one of claims 1 to 7, wherein the scissor type lifting mechanism further comprises a guide rail, the guide rail is arranged on the movable base, the second transmission member is slidably arranged on the guide rail, and the driving member is configured to drive the second transmission member to move along the guide rail.

9. The battery swapping apparatus according to any one of claims 1 to 8, wherein the scissor type lifting mechanism further comprises a lead screw and a nut, the nut sleeves the lead screw and is in threaded fit with the lead screw, the driving member is configured to drive the lead screw to rotate, and the second transmission member is fixed to the nut.

10. The battery swapping apparatus according to any one of claims 1 to 9, wherein the battery swapping apparatus further comprises:
a lifting platform, the scissor type lifting mechanism being arranged between the movable base and the lifting platform, and the scissor type lifting mechanism being configured to drive the lifting platform to move up and down; and
a floating platform floatingly connected to the lifting platform and located above the lifting platform, the locking and unlocking mechanism being arranged on the floating platform.

11. The battery swapping apparatus according to claim 10, wherein the lifting platform and the floating platform are floatingly connected by at least one floating chain.

12. The battery swapping apparatus according to claim 10 or 11, wherein the battery swapping apparatus further comprises a locking assembly, and the locking assembly is configured to lock the floating platform to the lifting platform or release the floating platform from the lifting platform.

13. A battery swapping system, comprising:
a track;
the battery swapping apparatus according to any one of claims 1 to 12, movably arranged on the track;
a battery swapping platform, located at one end of the track; and
a battery picking and placing apparatus, located at the other end of the track.
